# EUROPEAN PATENT APPLICATION

(11) **EP 2 833 180 A1**
(43) Date of publication of application: **04.02.2015**
(21) Application number: 13178992.7
(22) Date of filing: 01.08.2013
(51) Int. Cl.: G02B 6/44

(54) **Cable guide element for optical fibers**

(71) Applicant: 3M Innovative Properties Company, Saint Paul, Minnesota 55133-3427 (US)
(72) Inventor: Lutterkordt, Ulrich, 42111 Wuppertal (DE)
(74) Representative: Müller, Bruno

(57) **Abstract**

The invention relates to a cable guide element (100) for optical fibers. The cable guide element (100) according to the invention comprises at least one wall defining a through channel (110), in which optical fibers may be supported and guided, wherein the size of the through channel is adjustable in relation to the number of optical fibers being guided through the through channel.

## Description

The invention relates to a cable guide element for optical fibers as well as to a optical fiber organizer with a cable guide element.

Telecommunication cables are used for distributing all kind of data across fast networks. A telecommunication cable typically includes a bundle of individual telecommunication lines (either optical fibers or copper wires) that are encased with a protective sheath. As telecommunication cables are routed across data networks, it is necessary to periodically open the cable so that for example one or more telecommunication lines therein may be spliced, thereby allowing data to be distributed to other cables or "branches" of the telecommunication network. In distribution points of a telecommunications network it is also necessary to install organizers where the cables may be managed and connected to the necessary telecommunications infrastructure such as for example splitters etc.

Commonly, optical fiber organizers are arranged in racks that comprise optical fiber storage and/or splice trays mounted on support systems. Two major issues in the design and production of optical fiber distribution equipment, both resulting from the nature of optical fibers themselves, are the minimum bend radius to which optical fibers can be subject without damage, and the fact that a spare of slack length of optical fibre must be left at each connector to allow for a change in the connection route followed by a fiber.

WO 2005/026800 discloses a modular unit for an optical fibre distribution frame, carrying means for splicing, splitting or termination the optical fibers and having means defining an opening in a wall thereof through which the optical fibers leading to or from the said unit pass to other such units and/or to or from the said distribution frame. The means defining an opening comprise a fiber guide element being a substantially annular element with an outwardly curved flaring wall. It further comprises a slot in one of its sidewalls in order to be able to insert cables into the guide element.

WO 99/47961 discloses a cable guide having a protective wall defining a through channel, in which cables enclosed by the wall may be supported and guided as they pass longitudinally through the cable guide, wherein the cable guide is provided with a passageway in the protective wall through which cables may be passed out of the channel laterally with respect to the cable guide.

There is a need to provide a further cable guide for optical fibers. Preferably the cable guide should be more flexible as those known in the prior art and they should provide more functionalities as those known in the prior art.

The present invention provides a cable guide element for optical fibers, the cable guide comprising at least a wall defining a through channel, in which optical fibers may be supported and guided. The size of the through channel of the cable guide element according to the invention is adjustable in relation to the number of the optical fibers being guided through the through channel. The wall of the cable guide element may be made out of any material, that is suitable for producing a guide element for optical fibers. Such materials may be plastic, metal or suitable composite materials. Plastic materials are generally preferred because they allow effective ways of producing parts, e.g. by injection molding. The wall may have any kind of shape that allows defining a through channel for optical fibers. The shape of the through channel may for example be round, oval, square or rectangular. According to the invention the size of the through channel is adjustable in relation to the number of optical fibers being guided through the through channel. If the number of optical fibers being guided through the through channel is small the size of the through channel is adjusted to a small size. If the number of the optical fibers being guided through the through channel is high the size of the through channel is adjusted to a big size.

The cable guide element may comprise a u-shaped base element as well as a cover element, wherein the cover element is movable mounted relative to the base element. The cover element may be guided in the u-shaped base element, i.e. by the two extensions of the u-shaped base element. According to this embodiment, the through channel is surrounded by the u-shaped base element and the cover element. By making the cover element movable relative to the base element, the size of the through channel may easily be adjusted. Providing a u-shaped base element offers the advantage that the base element alone is already able to support and guide optical fibers. In addition it provides the possibility of easily inserting optical fibers into the cable guide element. No additional slit is needed for this purpose. The movable cover element provides the additional advantage of being able to adjust the size of the through channel.

Base element and u-shaped cover element may each be made out of one piece. It is also possible to make base element and cover element each out of more than one piece.

The u-shaped base element may comprise at least one recess for guiding the cover element. A guiding recess facilitates easy moving of the cover element within the extensions of the u-shaped base element, which allows easy adjusting of the size of the through channel. The at least one recess may be arranged on the inner side of the u-shaped base element facing the through channel. It is also possible that the recess may be arranged on the outer side of the u-shaped base element. In such a case the cover element needs to have a design that is able to cooperate with such a guiding structure. The u-shaped base element may comprise more than one recess, for example two or three recesses. The recesses may extend parallel to each other along the extensions of the u-shaped base element. The recess may be arranged on both extensions of the u-shaped base element. They may be provided in a symmetrical manner or in an asymmetrical manner, e.g. one extension provides one recess and the other extension provides two or more recess. Any other combination of number of recesses is possible as well.

The u-shaped base element may comprise at least one mounting collar on the outer side facing away from the through channel. For secure positioning of the guide element to - for example - an optical fiber organizer, two parallel collars may be provided on the base element in order to be able to place a wall of - for example - the optical fiber organizer between the two parallel collars. The u-shaped base element may also comprise more than two parallel mounting collars. This allows fixing the guide element in different positions relative to the wall of for example the optical fiber organizer. Instead of a optical fiber organizer the guide element of the invention may be mounted on any optical fiber unit that comprises a wall through which fibers need to be guided. Examples of those optical fiber units are any kind of units for splicing and/or patching applications.

The u-shaped base element may comprise on at least one side an outwardly curved wall or wall segment. The outwardly curved wall makes supporting and guiding of optical fibers being guided through the through channel more secure. The outwardly curved wall may extend around the entire through channel of the cable guide element or it may only extend around parts of the through channel. If the optical fibers being guided through the through channel entre the through channel only from one side, the partially extending outwardly curved wall may be sufficient. If the optical fibers being guided through the through channel entre the through channel from several sides, the outwardly curve wall may extend around the entire through channel. The outwardly curved wall may extend only on one side of the cable guide element, e.g. only on the side that extends outside of - for example - an optical fiber organizer. Or only on the side that extends inside of - for example - an optical fiber organizer. It is also possible that the outwardly curved wall may extend on both sides of the cable guide element, i.e. the two sides that extends on both sides of the wall the optical fibers are guided through.

The radius of the outwardly curved wall may be selected such that the minimum bend radius of the optical fibers being guided through the through channel is reflected. Such a geometry makes supporting and guiding of optical fibers being guided through the through channel even more secure.

The cover element may have an essentially rectangular and/or flat shape and may extend from one extension of the u-shaped base element to the other extension of the u-shaped base element. Such a shape provides a simple way of converting the u-shaped base element into a closed through channel. Depending on the shape of the base element, the cover element may comprise any other suitable shape.

The cover element may comprise at least one protrusion cooperating with the at least one recess of the base element. Such a construction facilitates easy moving of the cover element within the extensions of the u-shaped base element, which allows easy adjusting of the size of the through channel. The number, shape and/or position of the protrusion is adapted to u-shaped base element in order to facilitate the cooperation.

The cover element may comprise on at least one side an outwardly curved wall or wall segment. The outwardly curved wall makes supporting and guiding of optical fibers being guided through the through channel more secure. The outwardly curved wall may extend around the entire through channel of the cable guide element or it may only extend around parts of the through channel. If the optical fibers being guided through the through channel entre the through channel only from one side, the partially extending outwardly curved wall may be sufficient. If the optical fibers being guided through the through channel entre the through channel from several sides, the outwardly curve wall may extend around the entire through channel. The outwardly curved wall may extend only on one side of the cable guide element, e.g. only on the side that extends outside of for example an optical fiber organizer. Or only on the side that extends inside of for example an optical fiber organizer. It is also possible that the outwardly curved wall may extend on both sides of the cable guide element, i.e. the two sides that extends on both sides of the wall the optical fibers are guided through.

The radius of the outwardly curved wall is selected such that the minimum bend radius of optical fibers being guided through the through channel is reflected. Such a geometry makes supporting and guiding of optical fibers being guided through the through channel even more secure.

The cable guide element comprises at least one elastic element on at least one of its walls facing the through channel. The elastic element provides an even more secure way of guiding optical fibers through the through channel. Elastic elements may be arranged on opposing walls of the through channel, wherein the opposing walls are movable relative to each other. Such a construction provides the possibility of fixing optical fibers within the through channel. For fixing optical fibers in the through channel the size of the through channel may be selected such that the elastic elements press the optical fibers in the through channel together. In other words the optical fibers may be clamped between the elastic elements on the opposite walls of the through channel. The pressure should be selected such that the fibers are not damaged.

The cable guide element may comprise at least one fixing element for fixing the cover element relative to the base element. The fixing element may be any suitable element that allows fixing two elements relative to each other. Example for such elements are snap fit elements, sliding elements that may be moved from an open position into a locking position and/or sliding elements comprising elements that are able to provide a certain pre tension.

The fixing element may cooperate with a structure that allows fixing the cover element relative to the base element in different positions thereby adjusting the size of the through channel.

The invention also relates to an optical fiber organizer for managing and/or connecting optical fibers which may comprise at least one cable guide according to any of the preceding claims for guiding optical fibers through a wall of the organizer according to the above description.

The invention will now be described in more detail with reference to the following Figures exemplifying a particular embodiment of the invention:
- Fig. 1: is a perspective view of an optical fiber organizer with a cable entry according to the invention;
- Fig. 2: is a perspective view of one embodiment of a cable guide element for optical fibers according to the invention;
- Fig. 3: is a perspective view of the cable guide element for optical fibers shown in Fig. 2 mounted in an opening of a wall of a optical fiber organizer;
- Fig. 4: is a cross-section through the cover element with the fixing element of the cable guide element for optical fibers shown in Fig. 2;
- Fig. 5: is a detailed view of the fixing element of the cable guide element for optical fibers shown in Fig. 2 and
- Fig. 6 to 8: are perspective views of the cable guide element for optical fibers shown in Fig. 2 with the cover element in different positions.

Herein below various embodiments of the present invention are described and shown in the drawings wherein like elements are provided with the same reference numbers. Directional terms such as "top, "bottom", "right", "left" and others are used with reference to the orientation of the Figure(s) being described.

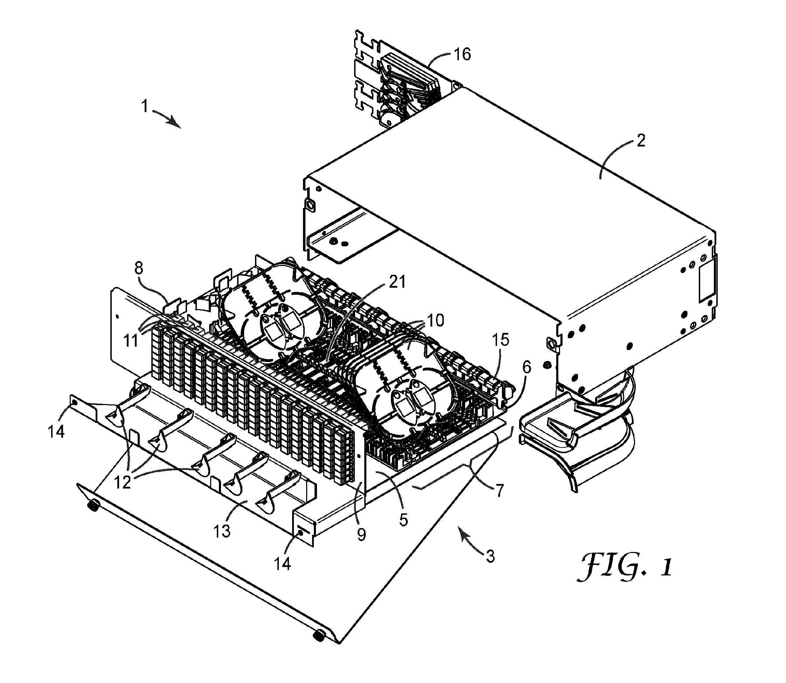

Fig. 1 is a perspective, exploded view of an optical fiber organizer 1. The optical fiber organizer 1 may be part of an optical fiber distribution frame or rack for the management of optical fiber cables, optical fibers and optical fiber connections. The optical fiber organizer 1 comprises a housing 2 and a drawer 3, that is slidably arranged in the housing 2 and enters the housing 2 at its front wall. The housing comprises a rear side wall that is positioned opposite the front wall. It further comprises two parallel side walls that are arranged perpendicular to the front and the rear side wall. The drawer 3 has a two level structure, a first level 4, e.g. a lower level, that may provide an area for slack storage of entering cables and a second level 5, e.g. an upper level, that may be configured to carry a support system 7 for optical fiber trays. Fiber can be routed from one level to the other across a rear end 6 of the drawer 3. For providing a safe guidance for these fibers into the drawer the fibers may be guided through fiber tubes (not shown) fitted in fiber tube guide elements 15. Several of such fiber-tube guide elements 15 may be attached to the rear end 6 of the drawer.

Fibers that are managed in the optical fiber organizer 1 may enter or exit the housing 2 through an opening in one of its side walls. A fiber guide element 100 for such an opening is shown in the following drawings.

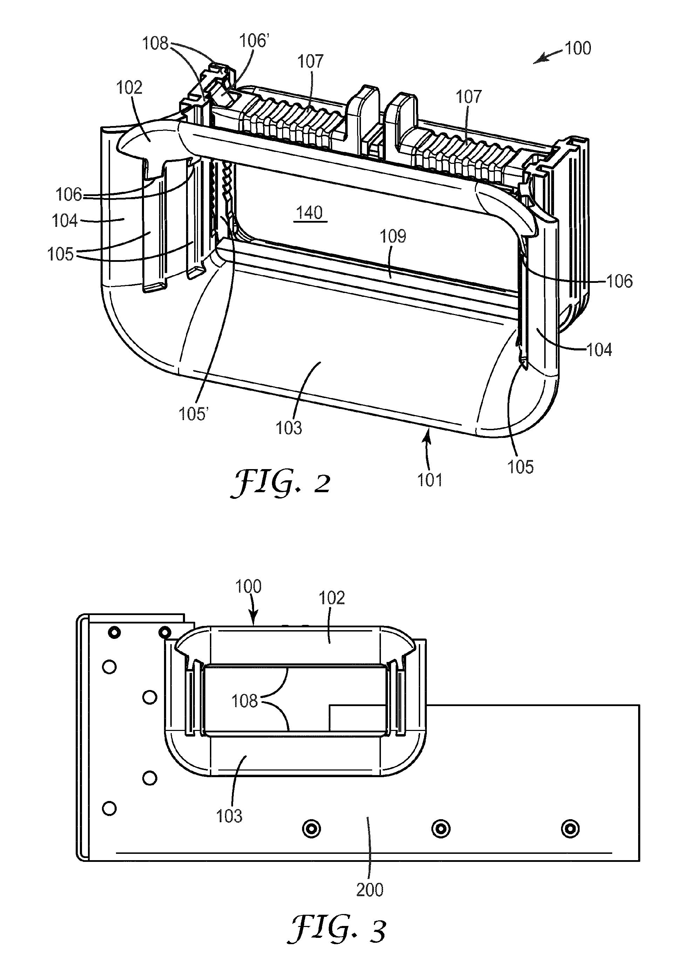

Fig. 2 is a perspective view of of one embodiment of a cable guide element 100 for optical fibers according to the invention. The cable guide element 100 comprises a u-shaped base element 101 and a cover element 102. The u-shaped base element 101 provides a middle portion 103 and two extensions 104 extending in a parallel manner from the edges of the middle portion 103 thereby forming a U. Middle portion 103 and extensions 104 provide outwardly curved wall segments, which have a radius reflecting the minimum bend radius of fibers being supported and guided by the cable guide element 100. In the area of the edge between the middle portion and the extensions 104, the outwardly curved wall segment forms an outwardly curved edge.

The cover element 102 has a generally rectangular shape and extends between the two extensions 104 of the u-shaped base element 101. The cover element 102 also provides an outwardly curved wall segment with a radius reflecting the minimum bend radius of fibers being supported and guided by the cable guide element 100.

The cable guide element 100 further provides two elongated fixing elements 107 for fixing the cover element 102 to the u-shaped base element 101. The fixing elements 107 are arranged on the outside of the cover element 102 which is the side facing away from the through channel. The fixing elements 107 are designed as gliders extending from the middle of the cover portion towards the extension 104 of the base element 101 that will be described in more detail below.

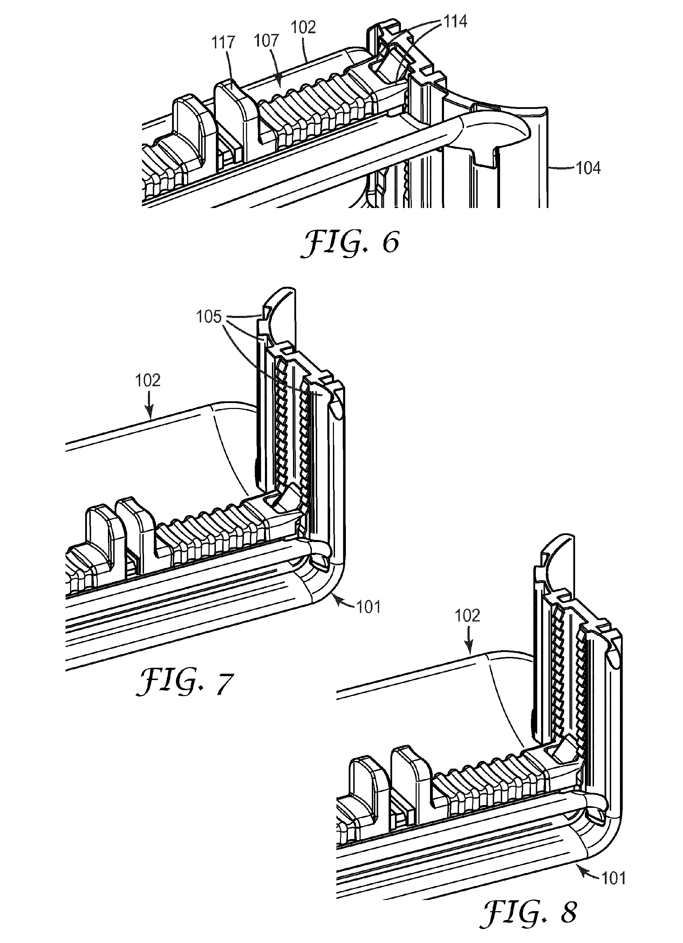

The extensions 104 of the u-shaped base element 101 provide three parallel recesses 105 (only two of them can be seen in Fig. 2 - the third one can for example be seen in Fig. 7) on their inner walls for guiding corresponding protrusions 106 of the cover element 102. The protrusions 106 extend in a direction inside the through channel. The extensions 104 of the u-shaped base element 101 further provide an additional recess 105' on their inner walls for guiding a further corresponding protrusion 106' of the cover element 102. Recess 105' and protrusion 106' are arranged between recesses 105 and protrusions 106. The protrusion 106' extends in a direction outside of the through channel. All the described recesses and protrusions serve a reliable and easy guidance of the cover element 102 relative to the base element 101, which allows easy adjustment of the size of the through channel in relation to the number of the optical fibers being guided through the through channel.

The extensions 104 of the guiding element 100 each further provide a stepped structure 108 for interacting with the fixing elements 107. The stepped structure extends on both sides of the recess 105' along the extensions 104 and provides a plurality of equidistant steps.

The extensions 104 provide mounting collars 117 on their outer walls for fixing the guiding element to an opening of a wall 200 through which the optical fibers should be guided. The mounting collars 117 are basically two parallel protrusions, building a groove for receiving the wall 200 between them, extending around the outer periphery of the u-shaped base element 101. The embodiment shown in the figures actually provides four mounting collars 117, each two of them building such a groove. This geometry provides the possibility of mounting the cable guiding element 100 in two different positions relative to the wall 200.

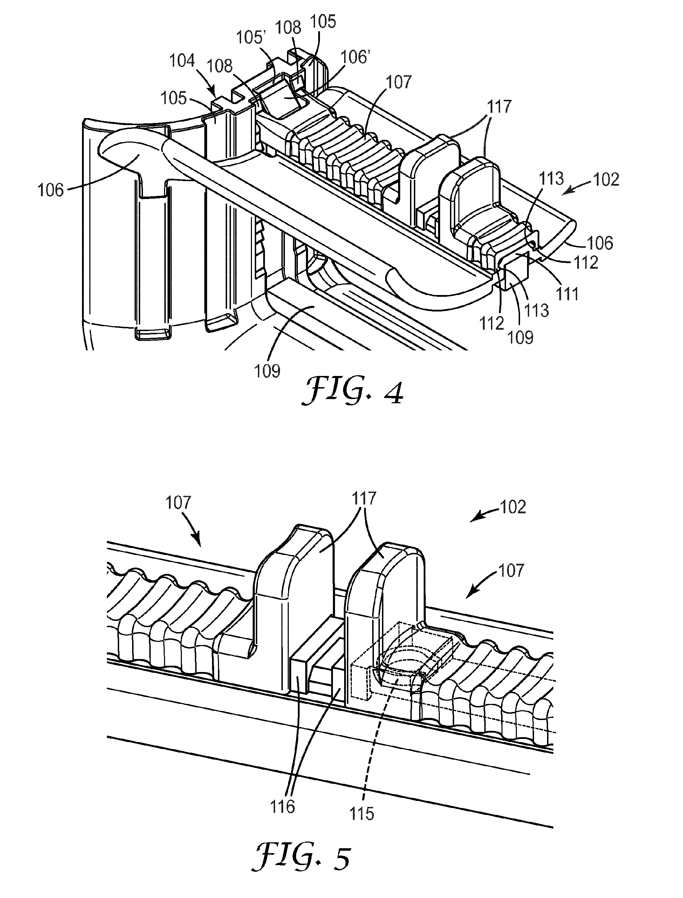

A rubber strip 109 is provided on the middle portion 103 of the u-shaped base element 101. The rubber strip is arranged next to the outwardly curved wall segment of the u-shaped base element 101. A second rubber strip 109 is provided parallel to the first one on the cover element 102 (not visible in Fig. 2 - but visible in Fig. 3 and Fig. 4). The rubber strips 109 are used for fixing the optical fibers that are guided through the through channel 110. If the cover element 102 is put into a lower position, the optical fibers guided through the through channel may be clamped between the upper and the lower rubber strip 109. This clamping function may prevent optical fibers from slipping through the through channel, if for example some kind of activities are work is being done to the optical fiber inside or outside an optical fiber organizer 200.

In Fig. 3 the guiding element 100 according to the invention is shown mounted in an opening of a wall of an optical fiber organizer 200. The guiding element 100 is shown with the cover element 102 in an open position.

Fig. 4 is a cross-section through the cover element 101 with the fixing element 107 of the cable guide element 100 for optical fibers. In the background of Fig. 4 an extension 104 of the base element 101 can be seen. The extension 104 comprises parallel recesses 105 and 105' as well as a stepped structure 108 extending on both sides of the recess 105'. On the left hand side of Fig. 4 a portion of the outwardly curved wall segment of the cover element 102 can be seen. The opposing edge of the cover element 102 also provides an outwardly curved wall segment which can be seen on the right hand side of Fig. 4. In between those two outwardly curved wall sections the cover element provides a bridge like portion 111. On the upper side, facing away from the through channel the fixing elements 107 are attached over snap fit elements 112 interacting with corresponding recesses 113 in the cover element 102 on both sides of the bridge like portion 111. The fixing elements 107 also provide a flat section 117 extending perpendicular to the longitudinal extension of the fixing element for manually activating the fixing element 107. On the opposite end of the flat section 113 the fixing elements 107 each provides two parallel annexes 114 interacting with the stepped structure 108 of the extension 104 of the u-shaped base element for fixing the cover element relative to the base element (see for example Fig. 6). The fixing elements 107 are pressed against the extension 104 of the base element 101 by means of spring elements 115 (see Fig. 5). The spring elements 115 of the embodiment shown in the Figures are Ω-shaped. Fixing elements 107 and spring elements 115 are made out of one part. It is of course also possible to provide a separate spring element 115 in order to bring the required tension between fixing element 107, cover element 102 and base element 101. The spring elements 115 abut against collars 116 in the middle of the cover element.

Fig. 6, 7 and 8 show the cover element 102 with the fixing elements 107 in different positions that will be described in the following. In Fig. 6 the cover element 102 is shown in an upper position relative to the base element 101. The fixing elements 107 (only one of which is shown in Fig. 6) is not in engagement with the stepped structure 108 on the extension 104. In Fig. 7 the cover element 102 is shown in a lower position relative to the base element 101. The fixing elements (only one of which is shown in Fig. 7) is not in engagement with the stepped structure 108 on the extension 104. In Fig. 8 the cover element 102 is shown in the same position as in Fig. 7. The fixing elements (only one of which is shown in Fig. 8) is in engagement with the stepped structure 108 on the extension 104 thereby fixing the cover element 101 relative to the base element 102 and preventing a relative movement of the cover element. 101.

## Claims

1. Cable guide element (100) for optical fibers,
the cable guide comprising at least one wall defining a through channel (110), in which optical fibers may be supported and guided,
wherein the size of the through channel is adjustable in relation to the number of optical fibers being guided through the through channel.

2. Cable guide element (100) according to claim 1, wherein the cable guide element comprises an u-shaped base element (101) as well as a cover element (102), wherein the cover element is movable mounted relative to the base element.

3. Cable guide element (100) according to claim 1 or 2, wherein the u-shaped base element (101) comprises at least one recess (105, 105') for guiding the cover element (102).

4. Cable guide element (100) according to claim 3, wherein the at least one recess (105, 105') is arranged on the inner side of the u-shaped base element (101) facing the through channel (110).

5. Cable guide element (100) according to any of the preceding claims, wherein the u-shaped base element (101) comprises at least one mounting collar (117) on the outer side facing away from the through channel (110).

6. Cable guide element (100) according to any of the preceding claims, wherein the u-shaped base element (101) comprises on at least one side an outwardly curved wall.

7. Cable guide element (100) according to any of the preceding claims, wherein the cover element (102) has an essentially rectangular and/or flat shape and extends from one extension (104) of the u-shaped base element (101) to the other extension (104) of the u-shaped base element (101).

8. Cable guide element (100) according to any of the preceding claims, wherein the cover element (102) comprises at least one protrusion (106, 106') cooperating with the at least one recess (105, 105') of the base element (101).

9. Cable guide element (100) according to claim 8, wherein the protrusions (106, 106') extend on opposite ends of the cover element (102) facing the extension (104) of the u-shaped base element (101).

10. Cable guide element (100) according to any of the preceding claims, wherein the cover element (102) comprises on at least one side an outwardly curved wall.

11. Cable guide element (100) according to any of the preceding claims, wherein the cable guide element comprises at least one elastic element (109) on at least one of its walls facing the through channel (110).

12. Cable guide element (100) according to claim 11, wherein elastic elements (109) are arranged on opposing walls of the through channel (110), wherein the opposing walls are movable relative to each other.

13. Cable guide element (100) according to any of the preceding claims, wherein the cable guide element comprises at least one fixing element (107) for fixing the cover element (102) relative to the base element (101).

14. Cable guide element (100) according to any of the preceding claims, wherein the fixing element (107) is cooperating with a structure (108) that allows fixing the cover element (102) relative to the base element (101) in different positions thereby adjusting the size of the through channel (110).

15. Optical fiber organizer (1) for managing and/or connecting optical fibers comprising at least one cable guide (100) according to any of the preceding claims for guiding optical fibers trough a wall (200) of the organizer.
